# EUROPÄISCHE PATENTSCHRIFT

(11) **EP 0 374 600 B1**
(45) Veröffentlichungstag und Bekanntmachung des Hinweises auf die Patenterteilung: **23.08.1995**
(21) Anmeldenummer: 89122566.6
(22) Anmeldetag: 07.12.1989
(51) Int. Cl.: H01M 2/10, B25F 3/00, H02J 7/00

(54) **Strom-Versorgungseinrichtung**
Electric power supply device
Dispositif d'alimentation en courant

(30) Priorität: 10.12.1988 DE 3841735
(43) Veröffentlichungstag der Anmeldung: 27.06.1990
(73) Patentinhaber: GARDENA Kress + Kastner GmbH, D-89079 Ulm (DE)
(72) Erfinder:
(74) Vertreter: Patentanwälte Ruff, Beier, Schöndorf und Mütschele

(56) Entgegenhaltungen:
- EP-A- 0 071 356
- FR-A- 2 108 729
- FR-A- 2 232 859
- FR-A- 2 282 324
- US-A- 3 969 796
- US-A- 4 084 123
- US-A- 4 391 882
- US-A- 4 431 245
- PATENT ABSTRACTS OF JAPAN, Band 10, Nr. 306 (E-446)[2362], 17. Oktober 1986

## Beschreibung

Die Erfindung betrifft eine elektrische Strom-Versorgungseinrichtung nach dem Oberbegriff des Patentanspruches 1. Sie soll für netzunabhängig zu versorgende Einheiten bzw. Geräte, insbesondere für mobile, tragbare oder im mobilen bzw. getragenen Zustand zu betreibende Geräte geeignet sein, wie sie z.B. Elektrowerkzeuge in Form von Handbohrmaschinen, Handschraubern, Elektro-Gartengeräten und ähnliches, darstellen.

Die Versorgungseinrichtung weist zur Erzielung einer einfachen Handhabung erfindungsgemäß eine Strom-Speichereinheit auf, die in einen Arbeits-Stromkreis des Gerätes einzuschalten ist und den Arbeitsstrom zumindest teilweise liefert. Diese Speichereinheit soll mit einer Halterung zu verbinden sein, die zweckmäßig nach Art eines elektrischen Anschlußstückes zumindest die elektrische Leitungsverbindung zwischen der Speichereinheit und dem Stromkreis herstellt oder sogar im wesentlichen die gesamte Speichereinheit haltert. Zur Herstellung der elektrischen Leitungsverbindung zwischen der Halterung und der Speichereinheit sind lösbare Kontaktpaare vorgesehen, von denen mindestens eines aus Berührungskontakten besteht, die an der Halterung und der Speichereinheit angeordnet sind, wobei die Berührungskontakte im Bereich von Anlage- und Gegenanlageflächen der Speichereinheit und der Halterung vorgesehen sind. Die Speichereinheit und die Halterung sollen durch wenigstens partielle Bewegung quer zu diesen Anlage- und Gegenanlageflächen miteinander zu verbinden bzw. voneinander zu lösen sein.

Die kastenförmige Speichereinheit kann in eine Tasche an der Unterseite des Gerätegehäuses so einsetzbar sein, daß nur noch ein verhältnismäßig kleiner Teil der Speichereinheit unten freiliegt. Die Berührungskontakte der Speichereinheit können durch nach oben bzw. quer zu den Anlage- und Gegenanlageflächen vorstehende Stifte gebildet sein, die linienförmig an den versenkt innerhalb des Gerätegehäuses und oberhalb der Taschendecke liegenden Berührungskontakten des Gerätes anliegen, wobei diese Berührungskontakte durch Blattfederschenkel gebildet sein können. Diese Blattfederschenkel werden jedoch beim Einsetzen der Speichereinheit dann über einen verhältnismäßig großen Federweg in eine aufrechte Lage gedrückt, wobei eine zuverlässig elektrisch leitende und großflächige Berührung nur schwer zu gewährleisten ist. Außerdem kann der Zustand der Blattfederschenkel auch bei entfernter Speichereinheit kaum kontrolliert werden. Die Berührungskontakte der Speichereinheit würden hindernd über deren Oberseite vorstehen und könnten daher leicht beschädigt werden.

Liegen bei einer Strom-Versorgungseinrichtung die Berührungskontakte im Bereich von Eingriffsflächen, mit welchen die Speichereinheit und die Halterung lösbar ineinander greifen und sind diese Eingriffsflächen durch etwa parallel zu einer Steckrichtung der Löse- bzw. Einsetzbewegung liegende Flächen gebildet, so ist eine ausreichende und sichere Flächenpressung zwischen den Berührungskontakten der Kontaktpaare ebenfalls kaum zu gewährleisten. Außerdem wären auch hier die Kontakte nur schwer zugänglich und die Berührungsfläche klein.

Bestehen bei einer Strom-Versorgungseinrichtungen die Kontaktpaare aus Steckerstiften und Steckerbuchsen, so bedürfen diese zur sicheren Verbindung einer hohen Lagegenauigkeit und außerdem können sie durch Verschmutzung leicht funktionsuntüchtig werden.

Die US-A-4 431 245 zeigt eine Versorgungseinrichtung, bei welcher die Speichereinheit und die Halterung über eine Schlittenführung so zusammenzusetzen sind, daß ihre Fügerichtung etwa parallel zu den Kontaktflächen der Berührungskontakte liegt und sich eine raumaufwendige Anordnung dieser Kontakte ergibt.

Die FR-A-2 232 859 zeigt eine ähnliche Schlitten- bzw. Steckführung.

Der Erfindung liegt des weiteren die Aufgabe zugrunde, eine elektrische Strom-Versorgungseinrichtung der genannten Art zu schaffen, durch welche die Nachteile bekannter Lösungen vermieden sind und die vorzugsweise bei einfachem Aufbau eine besonders sichere und leichte Handhabung gewährleistet.

Zur Lösung dieser Aufgabe sind die Merkmale des Patentanspruches 1 geeignet. Erfindungsgemäß ist vorgesehen, daß mindestens ein Kontaktpaar durch Berührungskontakte gebildet ist, von denen die Kontaktfläche wenigstens eines Berührungskontaktes im wesentlichen in einer Ebene liegt, die von der zu den Anlage- bzw. Gegenanlageflächen rechtwinkligen Lage abweicht, vorzugsweise etwa parallel zur zugehörigen Anlage- bzw. Gegenanlagefläche oder höchstens unter einem spitzen Winkel zu dieser liegt. Mindestens einer dieser Berührungskontakte, insbesondere derjenige, dessen Kontaktfläche in der genannten Ebene liegt, ist quer zu dieser Ebene federnd nachgiebig, wobei dieser Berührungskontakt einen sehr kurzen Federweg mit sehr hoher Federprogression aufweisen kann, so daß ein hoher Kontaktdruck gewährleistet ist. Durch die beschriebene Ausbildung können die Berührungskontakte leicht zugänglich freiliegend ansgeordnet und daher jederzeit auf ihren Zustand nachprüfbar bzw. durch Bearbeitung blank zu machen sein, falls sie oxydiert sind. Außerdem können sie ohne besonderen zusätzlichen Raumbedarf mit verhältnismäßig großflächigen, im wesentlichen ebenen Kontaktflächen ausgestattet werden, so daß sie große Leitungsquerschnitte gewährleisten. Insbesondere bei flächiger Formgebung bzw. bei Ausbildung aus Kontaktblech können die Berührungskontakte auch gut geschützt angeordnet werden, so daß sie vor mechanischen Beschädigungen sicher sind.

Zweckmäßig weisen beide Berührungskontakte mindestens eines Kontaktpaares, insbesondere aller Kontaktpaare, flächige, beispielsweise länglich streifenförmige Kontaktflächen auf, die vorteilhaft im wesentlichen gleich groß sind und im zusammengesetzten Zustand annähernd deckungsgleich aneinander anliegen. Trotz ihrer Größe können die Berührungskontakte auf kleinem Raum eng nebeneinander vorgesehen werden, wobei z.B. die Kontaktflächen parallel nebeneinander und mit einem Abstand voneinander liegen, der wesentlich kleiner als ihre Streifenbreite ist. Außerdem können in Längsrichtung anschließende Fortsätze der Berührungskontakte deren Anschlußleiter bilden, wobei diese z.B. abgewinkelten Fortsätze die gleiche Streifenbreite wie die Berührungskontakte haben können. Die genannten und/oder andere Fortsätze können auch als Befestigungs- und Sicherungsglieder und/oder als Anschlußfahnen für die Berührungskontakte vorgesehen sein, so daß sich ein äußerst einfacher Aufbau ergibt.

Die Berührungskontakte können gegenüber der jeweils zugehörigen Anlage- bzw. Gegenanlagefläche querversetzt oder an einem abgesetzten Bereich dieser Fläche vorgesehen sein. Besonders vorteilhaft ist es jedoch, wenn die Berührungskontakte jeweils annähernd in der Ebene der zugehörigen Anlage- bzw. Gegenanlagefläche liegen, die ihrerseits durchgehend absatzfrei bzw. kontinuierlich, insbesondere eben, ausgebildet sein kann. Zweckmäßig ist dabei je Kontaktpaar ein Berührungskontakt, insbesondere der an der Speichereinheit vorgesehene Berührungskontakt, lagestarr z.B. so angeordnet, daß er mit seiner von der Kontaktfläche abgekehrten Seite flächig an einer Stützfläche, beispielsweise an einer Außenfläche eines Trägers bzw. eines Gehäuses, anliegt, so daß er über diese Außenfläche allenfalls mit seiner Blechdicke vorsteht. Der jeweilige Berührungskontakt kann aber auch in einer an seine Breite angepaßten Vertiefung liegen bzw. mit Endschenkeln in diese Vertiefung eingreifen und am Boden dieser Vertiefung federnd abgestützt sein, so daß insbesondere der querbewegliche Berührungskontakt trotz einteiliger Ausbildung mit an beide Enden anschließenden Kontaktfedern geschützt angeordnet ist.

Eine besonders vorteilhafte Weiterbildung des Erfindungsgegenstandes besteht darin, daß die Kontaktpaare verhältnismäßig nahe bei einem Klappgelenk liegt, um welches die Speichereinheit beim Einsetzen bzw. Lösen gegenüber dem Halter schwenkbar ist und dessen Gelenkteile nach Art einer Steckverbindung voneinander getrennt werden können. Dadurch ergeben sich für die Kontaktanpressung günstige Hebelverhältnisse bei leichtgängiger Betätigung.

Zur leicht lösbaren Sicherung der Speichereinheit und des Haltes gegeneinander ist zweckmäßig mindestens eine Sperre vorgesehen, die zweckmäßig im Bereich des von den Berührungskontakten weiter entfernten Endes der Speichereinheit liegt, jedoch gegenüber diesem Ende zurückversetzt und zur Betätigung von der Seite her zugänglich ist, so daß die Gefahr einer versehentlichen Entsperrung sehr gering ist. Dies kann auch dadurch erreicht werden, daß zwei gesonderte, insbesondere achsgleich zueinander liegende Sperren vorgesehen und vorzugsweise so ausgebildet sind, daß zur Entsperrung beide Sperren gleichzeitig betätigt werden müssen. Die Betätigungshandhaben liegen zweckmäßig an voneinander abgekehrten Seiten in einem so kleinen Abstand voneinander, daß sie mit zwei Fingern einer Hand gleichzeitig erreicht werden können und dadurch im betätigten Zustand einen Haltegriff für die Speichereinheit bilden, so daß diese einhändig entsperrt und abgenommen bzw. eingesetzt werden kann.

Der Halter kann zwar als fester bzw. einteiliger Bestandteil des Gerätes ausgebildet sein, jedoch ist er zweckmäßig als gesonderter Bauteil ausgebildet, so daß gleiche Halter an unterschiedlichen Geräten angeordnet und daher an allen diesen Geräten gleiche Speichereinheiten bzw. dieselbe Speichereinheit verwendet werden kann. Der Halter kann dabei so ausgebildet und angeordnet sein, daß die Speichereinheit im zusammengesetzten Zustand im wesentlichen vollständig frei an der Außenseite des Gerätes liegt und somit praktisch eine kontinuierliche Fortsetzung des Gerätegehäuses z.B. derart bildet, daß die Seitenflächen der Speichereinheit sowie deren eines Ende im wesentlichen bündig an entsprechende Außenflächen des Gerätes anschließen. Außerdem können der Halter und die Speichereinheit so ausgebildet sein, daß der Halter im zusammengesetzten Zustand im wesentlichen vollständig versenkt innerhalb einer Aufnahme der Speichereinheit liegt, so daß die Berührungskontakte seitlich abgeschirmt sind. Ist der Halter im wesentlichen flachstegförmig ausgebildet, so hat er nur einen sehr geringen Raumbedarf.

Ein besonders sicherer Halt der Speichereinheit ist gewährleistet, wenn diese gegenüber dem Halter ausschließlich im Bereich von drei Stellen formschlüssig gesichert ist, die zweckmäßig an den Ecken eines gedachten, spitzwinkligen Dreieckes liegen und in einer zu den Anlage- bzw. Gegenanlageflächen schrägen Ebene derart vorgesehen sein können, daß eine Stelle gegenüber der Ebene der Anlagefläche der Speichereinheit zurückversetzt ist; diese Stelle kann durch einen gegenüber der Breite der Speichereinheit wesentlich schmaleren Klappnocken am zugehörigen Ende der Speichereinheit gebildet sein. Mindestens eine weitere Stelle ist zweckmäßig gegenüber der Anlagefläche nach außen versetzt.

Die erfindungsgemäße Versorgungseinrichtung eignet sich z.B. für den Betrieb von Grasschneidern, Turbotrimmern, Scheren, wie Heckenscheren, Bohrmaschinen, Elektroschraubern, Staubsaugern und ähnlichem, wobei der Halter unmittelbar am Motorgehäuse oder an einem mit diesem über einen Stiel verbundenen Griff vorgesehen sein kann. Die Strom-Versorgungseinrichtung kann aber z.B. auch als Starterbatterie z.B. für einen Verbrennungsmotor, wie für einen Rasenmäher, verwendet werden. Des weiteren kann die Speichereinheit gesondert vom Gerät anzuordnen und mit diesem über ein elektrisches Kabel zu verbinden sein. Andererseits kann der am Gerät vorgesehene Halter dafür ausgebildet sein, an eine beliebige Stromquelle, beispielsweise eine Batterie, angeschlossen zu werden, so daß das Gerät z.B. über einen mit dem Halter verbundenen Autostecker an der Zigarettenanzünder-Buchse eines Kraftfahrzeuges mit dessen Batterie oder von einem Hochleistungs-Transformator betrieben werden kann.

Die Speichereinheit weist zweckmäßig Batterien oder wiederaufladbare Speicherzellen auf, so daß sie praktisch einen Batterie- bzw. Akku-Pack bildet. Zur Aufladung können Schnell-Ladegeräte mit einer Durchschnittsbelastung von 3 bis 5 oder sogar bis 10 A oder Normal-Ladegeräte mit einer Durchschnittsbelastung in der Größenordnung von etwa 1,2 A verwendet werden. Des weiteren ist die Verwendung von Ladegeräten denkbar, die über Solarzellen gespeist werden. Für die Aufladung mit relativ niedriger Belastung weist die Speichereinheit zweckmäßig einen gesonderten, zumindest 2-poligen Nebenanschluß auf, so daß eine Aufladung auch dann möglich ist, wenn die Speichereinheit in den Halter eingesetzt bzw. auf den Halter aufgesetzt ist. Ansonsten kann die Aufladung über die genannten Berührungskontakte erfolgen, wobei zweckmäßig ein dritter Berührungskontakt bzw. ein drittes Kontaktpaar zur Laderegelung vorgesehen ist, die z.B. thermisch arbeiten kann, so daß sie auch bei beschädigter Speicherzelle anspricht.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ausführungsbeispiele der Erfindungen sind in den Zeichnungen dargestellt und werden im folgenden näher erläutert. In den Zeichnungen zeigen:
- Fig. 1: eine erfindungsgemäße Strom-Versorungseinrichtung in teilweise zusammengesetzter Seitenansicht,
- Fig. 2: eine weitere Ausführungsform der Versorgungseinrichtung für die Verwendung der Speichereinheit nach Fig. 1,
- Fig. 3: den Halter und die Speichereinheit gemäß Fig. 1 im Längsschnitt und in auseinandergenommenem Zustand,

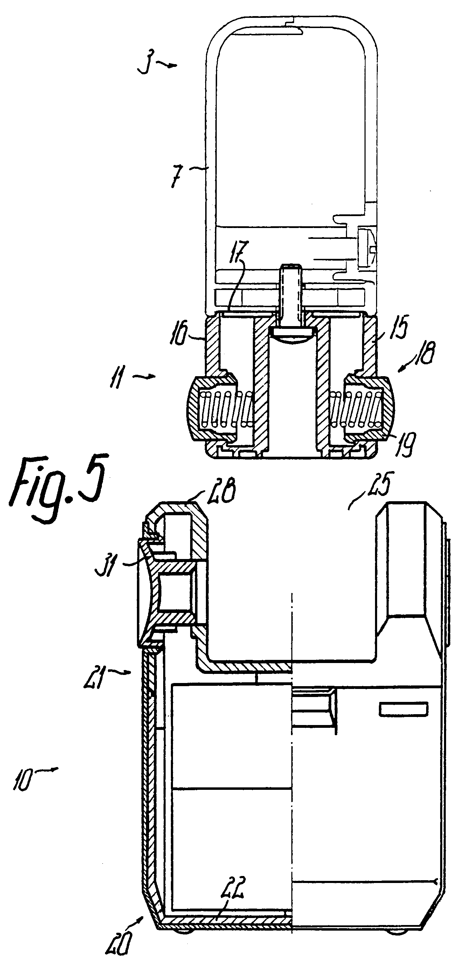

- Fig. 4: die Speichereinheit gemäß Fig. 3 in Draufsicht,
- Fig. 5: einen Querschnitt durch den rechten Bereich der Fig. 1 in vergrößerter Darstellung,
- Fig. 6: einen Querschnitt durch den mittleren Bereich der Fig. 1, jedoch im zusammengesetzten Zustand,
- Fig. 7: einen Querschnitt durch den linken Bereich der Speichereinheit gemäß Fig. 1,

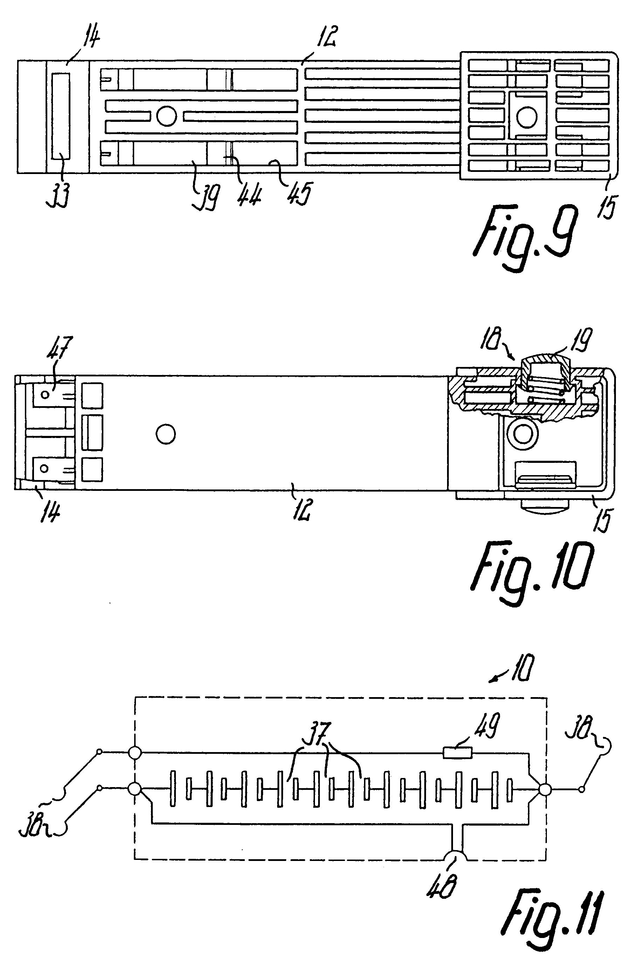

- Fig. 8: einen schrägen Teilschnitt des linken Bereiches der Speichereinheit gemäß Fig. 1,
- Fig. 9: den Halter gemäß Fig. 3 in Ansicht von unten,

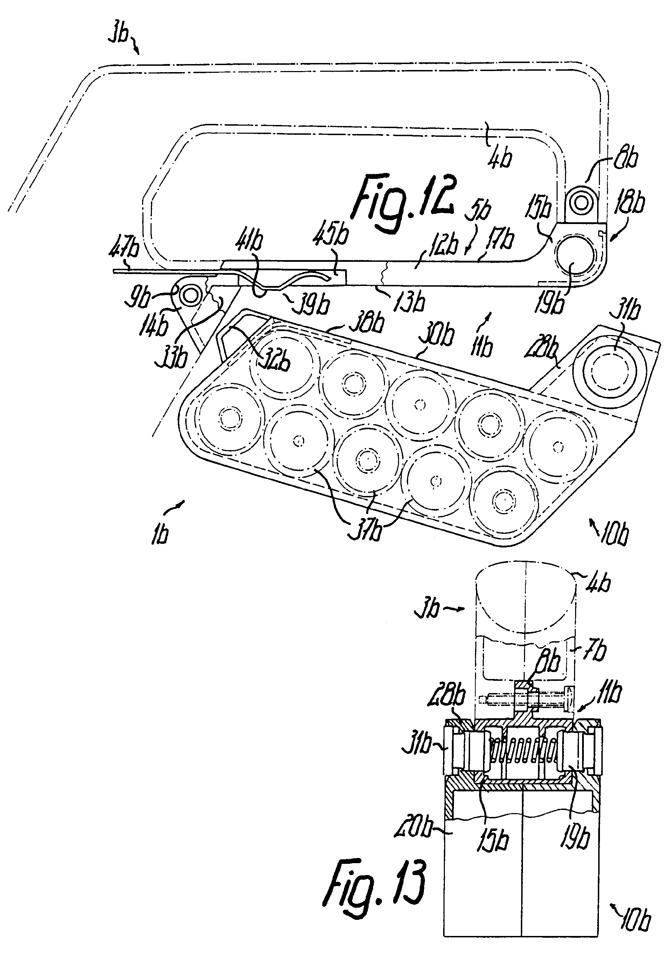

- Fig. 10: den Halter gemäß Fig. 3 in Draufsicht,
- Fig. 11: die elektrische Schaltung der Speichereinheit,
- Fig. 12: eine weitere Ausführungsform einer Versorgungseinrichtung in einer Darstellung entsprechend Fig. 1,
- Fig. 13: einen Querschnitt durch die Versorgungseinrichtung gemäß Fig. 12, jedoch im zusammengesetzten Zustand,
- Fig. 14: ein Ladegerät für die Speichereinheit und
- Fig. 15 bis 18: Ausführungsbeispiele für die Verwendung der Versorgungseinrichtung.

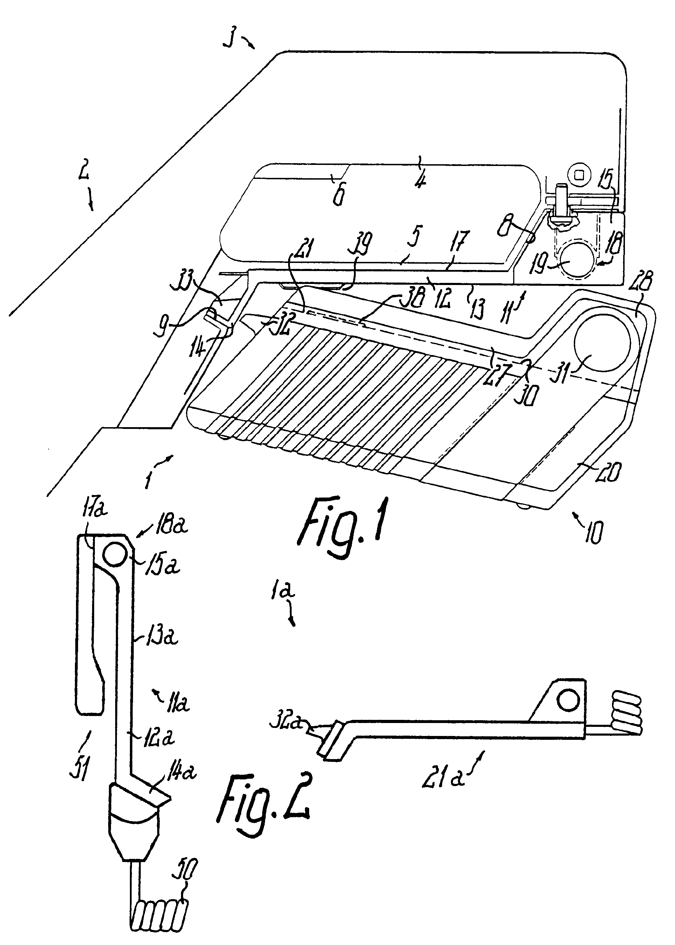

Die Strom-Versorgungseinrichtung 1 gemäß Fig. 1 dient zur Anordnung am Gerätegriff 3 eines beispielsweise als Elektrowerkzeug ausgebildeten Gerätes 2, wobei im dargestellten Ausführungsbeispiel der Gerätegriff 3 als Stielgriff ausgebildet ist. Der Gerätegriff 3 bildet mit einem oberen Längssteg einen mit einer Hand zu umgreifenden Greifsteg 4 und einen im Abstand parallel darunter liegenden Griffsteg 5, wobei an der Innenseite des Greifsteges 4 ein Druckschalter 6 zum Ein- und Ausschalten des Gerätes 2 angeordnet ist. Der Gerätegriff 3 ist gemäß Fig. 5 aus zwei in seiner Längsrichtung aneinanderschließenden seitlichen Griffschalen 7 zusammengesetzt, die einteiliger Bestandteil von Gehäuseschalen des Gerätegehäuses sein können. Der Gerätegriff 3 bildet dem Greifsteg 4 gegenüberliegend eine einspringende Eckzone, die in Seitenansicht an die Außenform der Versorgungseinrichtung 1 so angepaßt ist, daß diese im wesentlichen vollständig innerhalb dieser Eckzone liegt und Fortsetzungen der Seitenflächen sowie der hinteren Endfläche und auch die vom Greifsteg 4 abgekehrte Begrenzungsfläche des Gerätegriffes 3 bildet. Am hinteren Ende des zum Greifsteg 4 etwa parallelen Eckschenkels der einspringenden Ecke bildet der Gerätegriff 3 eine bis zur hinteren Endfläche sowie über seine Breite reichende, in Seitenansicht winkelförmige Nische 8, die unmittelbar hinter der Öffnung zwischen dem Greifsteg 4 und dem Griffsteg 5 liegt. Im anderen, kürzeren Eckschenkel bildet das Gerätegehäuse eine weitere, beispielsweise taschenförmige Nische 9, die unmittelbar im Anschluß an den Übergangsbereich der beiden im stumpfen Winkel zueinander liegenden Eckschenkel vorgesehen ist.

Der am Gerät 2 anzuordnende Bestandteil der Versorgungseinrichtung 1 besteht im wesentlichen aus einer kastenförmigen Speichereinheit 10 und einem im wesentlichen am längeren Eckschenkel gerätefest anzuordnenden, gegenüber der Speichereinheit 10 wesentlich kleineren Halter 11, welcher die lösbare Verbindung zwischen der Speichereinheit 10 und dem Gerät 2 herstellt. Der Halter 11 weist einen nur wenige Millimeter, beispielsweise weniger als 10 mm dicken Flachsteg 12 auf, der im wesentlichen vollständig versenkt in einer Vertiefung an der Unterseite des Gerätegriffes 3 bzw. des Griffsteges 5 angeordnet oder so ausgebildet sein kann, daß er diesen Griffsteg 5 im wesentlichen vollständig bildet. Der nur über einen Teil der Griffbreite reichende Flachsteg 12 bildet mit seiner unteren Flachseite eine annähernd über die gesamte Länge des Halters 11 im wesentlichen eben durchgehende, geschlossene oder verrippte Gegenanlagefläche 13 für die Speichereinheit 10. Am vorderen Ende bildet der Halter 11 einen einteilig vom Flachsteg 12 über die Gegenanlagefläche 13 entsprechend dem Winkel der einspringenden Ecke abstehenden Sicherungsschenkel 14, der im wesentlichen vollständig derart versenkt in der Nische 9 angeordnet ist, daß seine Schenkelinnenseite annähernd bündig an die Innenseite des zugehörigen Eckschenkels anschließt. Am anderen Ende geht der Flachsteg 12 in ein ebenfalls einteilig mit ihm ausgebildetes und in der entgegengesetzten Richtung vorstehendes Sperregehäuse 15 über, das den zugehörigen Endabschnitt der Gegenanlagefläche 13 bildet und in die Nische 8 eingreift. Das Sperregehäuse 15 ist gegenüber dem Flachsteg 12 geringfügig derart verbreitert, daß seine Seitenflächen bündig an die Seitenflächen des Griffsteges 7 anschließen und es praktisch wenigstens einen Teil des Verbindungssteges zwischen dem Greifsteg 4 und dem Griffsteg 5 bildet. Im Bereich des Sperregehäuses 15 und ggf. im Bereich des Flachsteges 12 sind Durchgangs-Senkbohrungen für die Aufnahme von Befestigungsschrauben vorgesehen, mit welchen der Halter 11 leicht auswechselbar
gegen mindestens einen der genannten Eckschenkel des Gerätegriffes 3 gespannt werden kann, wobei die Befestigungsschrauben zweckmäßig in der Trennebene zwischen den Griffschalen 7 liegen. Die von der Gegenanlagefläche 13 abgekehrte, durch den Sicherungsschenkel 14 und das Sperregehäuse 15 mehrfach abgesetzte bzw. abgewinkelte und von den Befestigungsschrauben durchsetzte Anschlußfläche 17 des Halters 11 ist somit über einen Teil der Halterlänge seitlich gegenüber den Seitenflächen des Griffes 3 zurückversetzt und reicht im Bereich des Sperregehäuses 15 mit seinen Seitenflächen 16 bis an die Griff-Seitenflächen, so daß sich eine genaue zentrierte Aufnahme des Halters 11 ergibt.

Zur zwar leicht lösbaren, jedoch versehentlich kaum auszulösenden Sicherung der Speichereinheit 10 im eingesetzten Zustand ist am Halter 11 eine Sperre 18 mit zwei achsgleich liegenden, voneinander weggerichtet federbelasteten Sperrgliedern in Form von Sperrknöpfen 19 vorgesehen, deren Auslösehandhaben jedoch an der Speichereinheit 10 angeordnet sind. Die napfförmig hohlen und Sperrfedern in Form von Schraubendruckfedern aufnehmenden Sperrknöpfe 19 stehen mit kugelkalottenförmigen Stirnflächen über die Seitenflächen 16 des Sperregehäuses 15 benachbart zur Gegenanlagefläche 13 vor und sind in ihren vorstehenden Endstellungen dadurch anschlaggesichert, daß sie an ihren inneren Enden vorstehende Anschlagbunde aufweisen, welche an den Innenseiten der Seitenwände des Sperregehäuses 15 anliegen. Die Sperrknöpfe 19 können mindestens so weit in das Sperregehäuse 15 hineingedrückt werden, daß die Scheitel ihrer äußeren Stirnseiten bündig mit den Seitenflächen 16 liegen. Durch ihre kugelkalottenförmigen Stirnflächen bilden die Sperrknöpfe 19 praktisch Einführschrägen.

Die Außenflächen der Speichereinheit 10 sind im wesentlichen durch ein Gehäuse gebildet, das eine untere bzw. zu seiner dem Halter 11 zugehörigen Seite auf voller Weite zu öffnende Gehäuseschale 20 und einen kappenförmigen Gehäusedeckel 21 aufweist, mit welchem die Öffnung der Gehäuseschale 20 lösbar verschlossen ist. Die Gehäuseschale 20 weist einen im wesentlichen durchgehend ebenen Gehäuseboden 22, eine vordere, dem Sicherungsschenkel 14 des Halters 11 zugeordnete bzw. für die im wesentlichen ganzflächige Anlage an dem zugehörigen Eckschenkel bestimmte Endwand 23 sowie eine gegenüberliegende, hintere Endwand 24 auf, die über einen an den Gehäuseboden 22 anschließenden Teil ihrer Höhe parallel zur vorderen Endwand 23 steht. Die Gehäusewand 23 steht spitzwinklig zum Gehäuseboden 22, so daß sich in Seitenansicht eine parallelogrammförmige Begrenzung des Gehäuses ergibt.

An dem im wesentlichen vollständig die Oberseite des Gehäuses bildenden Gehäusedeckel 21 ist eine über die Gehäuselänge durchgehende, in der Breite und der Tiefe an die Form des Flachsteges 12 und des Sperregehäuses 15 angepaßte Vertiefung 25 vorgesehen, deren Vertiefungsboden 26 praktisch durch die zum Gehäuseboden 22 parallele Deckelwand des Gehäusedeckels 21 gebildet ist. Über diesen Gehäuseboden 26 stehen beiderseits zwei an das vordere Ende des Gehäusedeckels 21 anschließende, parallele und hohle Längsstege 27 vor, deren Höhe geringfügig größer als die Dicke des Flachsteges 12 ist, und deren äußere Stegflanken im wesentlichen bündig an die Seitenwandungen des Gehäuses anschließen. Die hinteren Enden der Längsstege 27 steigen zu zwei weiter über den Vertiefungsboden 26 vorstehenden seitlichen Schilden 28 an, die gegenüber der Höhe des Sperregehäuses 15 ebenfalls geringfügig höher sind und in Seitenansicht etwa gleiche Form wie das Sperregehäuse 15 haben. Dadurch können der Flachsteg 12 und das Sperregehäuse 15 im wesentlichen vollständig versenkt bzw. seitlich abgeschirmt in der Vertiefung 25 liegen. An ihren einander zugekehrten Innenseiten weisen die Längsstege 27 und die Schilde 28 ineinander übergehende Einführschrägen 29 nach Art von Anphasungen auf, welche das selbsttätige Ausrichten der Speichereinheit 10 beim Einsetzen erleichtern und außerdem auf die genannten Einführschrägen der Sperrknöpfe 19 auflaufen, so daß diese selbsttätig zurückgedrückt werden, bis sie in Rastöffnungen an den Innenseiten der Schilde 28 einrasten und die Speichereinheit 10 formschlüssig sichern.

Der Vertiefungsboden 26 bildet über die gesamte Breite zwischen den Längsstegen 27 und den Schilden 28 eine im wesentlichen durchgehend ebene Anlagefläche 30 für die Anlage an der Gegenanlagefläche 13 des Halters 11. Die Anlagefläche 30 reicht nutartig über die gesamte Länge des Speichergehäuses und ist durch die Längsstege 27 sowie die Schilde 28 seitlich abgeschirmt. Zweckmäßig hat der Flachsteg 12 zwischen den Längsstegen 27 seitliches Spiel gegenüber dem Speichergehäuse, während das hintere, durch das Sperregehäuse 15 gebildete Ende des Halters 11 in Seitenrichtung nahezu spielfrei zwischen die Schilde 28 eingreift.

In die genannten innen liegenden Rastöffnungen für die Sperrknöpfe 19 sind von außen zugängliche Druckknöpfe 31 so hineinzubewegen, daß sie die Sperrknöpfe 19 entgegen Federkraft in ihre Auslösestellung zurückdrücken. Jeder Druckknopf 31 liegt bei eingesetzter Speichereinheit 10 daher zweckmäßig achsgleich zum zugehörigen Sperrknopf 19, wobei seine innere Stirnfläche eine ringförmige Aufnahmevertiefung für die Anlage der Stirnfläche des Sperrknopfes 19 bilden kann. Die Druckknöpfe 31, die ggf. mit innerhalb der hohlen Schilde 28 liegenden und sie umgebenden Druckfedern nach außen federbelastet sind, sind mit erweiterten, drucktastenartigen Köpfen an den Außenseiten der Schilde 28 zugänglich und bilden an ihren äußeren Stirnseiten Fingerkuhlen. Die nach außen in ähnlicher Weise wie die Sperrknöpfe 19 anschlagbegrenzten Druckknöpfe 31 können in den Schenkeln eines Bügels gelagert sein, welcher die Außenseite des Speichergehäuses an den Seitenwänden und am Gehäuseboden 22 umgibt und mit nach innen gerichteten, im Bereich seiner Schenkelenden liegenden Kragen von außen in die Durchgangsöffnungen der Lagerschilde 28 für die Druckknöpfe 31 eingesetzt ist, so daß dieser Bügel eine zusätzliche Sicherung des Gehäusedeckels 21 gegenüber der Gehäuseschale 20 bildet. Im Bereich des hinteren Endes des Gehäusedeckels 21 ist zu dieser Sicherung zweckmäßig in die Anlagefläche 30 eine Schraube eingesetzt, deren Schraubenschaft in ein Aufnahmeauge an der Innenseite der hinteren Endwand 24 eingreift. Durch die beschriebene Ausbildung der Schilde 28 und der Druckknöpfe 31 bilden diese einen Griff zum sicheren Halten und Tragen der Speichereinheit 10.

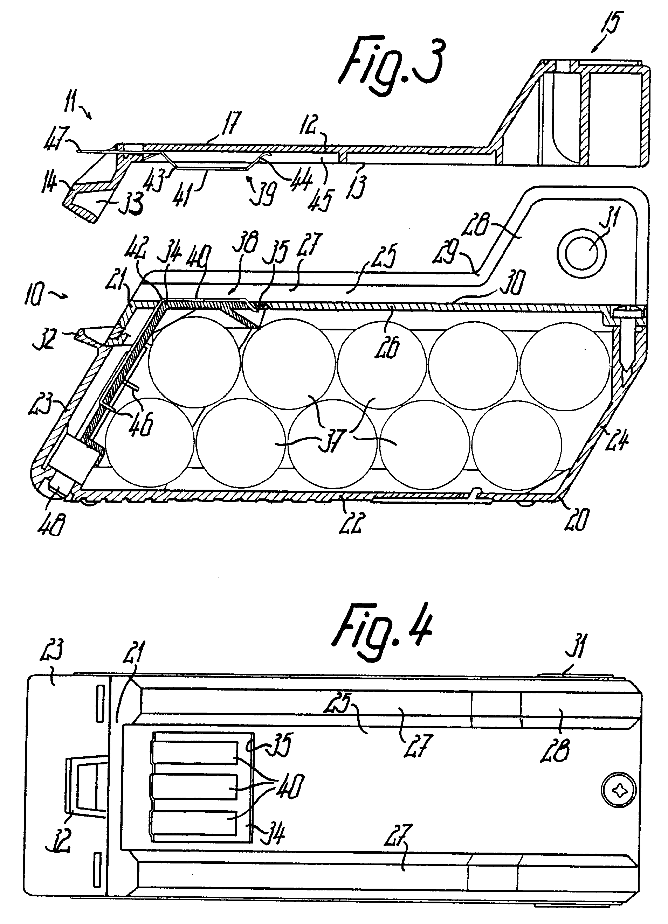

Am vorderen Ende und mit Abstand von der Bodenwand 22 bzw. näher bei der Anlagefläche 30 liegend weist das Speichergehäuse einen gegenüber seiner Breite wesentlich schmaleren, über die Außenseite der Endwand 23 stegartig vorstehenden Klappnocken 32 auf, der unmittelbar benachbart zur Trennebene zwischen der Gehäuseschale 20 und dem Gehäusedeckel 21 vorgesehen und als einteiliger Bestandteil mit der Gehäuseschale 20 ausgebildet ist. Beiderseits dieses Klappnockens 32 und etwa in derselben Höhe greift der Gehäusedeckel 21 gemäß Fig. 3 mit hakenartigen Sicherungsnocken in Öffnungen der Endwand 23 so ein, daß nach Lösen der hinteren Sicherungsschraube das hintere Ende des Gehäusedeckels 21 um eine durch diese Sicherungsnocken gebildete Gelenkachse scharnierartig angehoben und der Gehäusedeckel 21 dann durch Abziehen nach hinten von der Gehäuseschale 20 getrennt werden kann. Der Sicherungsschenkel 15 des Halters 11 weist an seiner Innenseite und unmittelbar benachbart zu seinem freien Ende eine an den Klappnocken 32 angepaßte Nockentasche 33 auf, die derart zu ihrer Taschenöffnung erweitert ist, daß sie eine Gelenköffnung für den gelenkigen Eingriff des Klappnockens 32 bildet. Die untere, der Gegenanlagefläche 13 gegenüberliegende Begrenzungsfläche der Taschenöffnung 33 ist im Querschnitt geringfügig konvex gekrümmt, so daß der Klappnocken 32 auf ihr mit seiner zur Endwand 23 etwa rechtwinkligen Flankenfläche leicht abrollen kann und dadurch eine Klappachse bestimmt ist, die in Querrichtung des Halters 11 und parallel zu den Anlage- und Gegenanlageflächen 30, 13 sowie zur Mittelachse der Sperren 18 liegt. Zum Einsetzen der Speichereinheit 10 wird diese in Schräglage gemäß Fig. 1 so an den Halter 11 herangeführt, daß der Klappnocken 32 in die Nockentasche 33 eintritt, wonach die Speichereinheit 10 um die Klappachse gegen den Halter 11 geschwenkt und gleichzeitig noch weiter in die Nockentasche 33 geschoben wird, bis die Sperren 18 in der beschriebenen Weise einrasten und der Klappnocken 32 dann nahezu spielfrei in die Nockentasche 33 eingreift.

Dadurch ist die Speichereinheit 10 nach Art einer Dreipunktaufhängung gesichert, wobei die Sicherung des vorderen Endes unterhalb der Anlagefläche 30 und die Sicherung des hinteren Endes oberhalb dieser Anlagefläche 30 liegt.

Zur elektrischen sowie leicht trennbaren Leitungsverbindung zwischen der Speichereinheit 10 und dem Gerät 2 sind an dem Halter 11 und dem Speichergehäuse einander zugeordnete Kontaktpaare vorgesehen, die jeweils durch zwei Berührungskontakte 38, 39 gebildet sind. Die Berührungskontakte 38 der Speichereinheit 10 sind an einem vom Speichergehäuse leicht lösbaren gesonderten Bauteil aus Isolierwerkstoff, nämlich z.B. einem Isolierwinkel 34, vorgesehen, der im wesentlichen vollständig innerhalb des Speichergehäuses liegt und nur über Steckverbindungen mit der Gehäuseschale 20 und/oder dem Gehäusedeckel 21 verbunden ist. Im dargestellten Ausführungsbeispiel ist der Isolierwinkel 34 mit einem etwa parallel zur Endwand 23 und in geringem Abstand von dieser liegenden Winkelschenkel in seitliche Steckführungen 36 der Gehäuseschale 20 so eingesetzt, daß sein anderer Winkelschenkel etwa in der Ebene des Vertiefungsbodens 26 liegt und in eine über die gesamte Breite der Anlagefläche 30 reichende Öffnung 35 nahe benachbart zum vorderen Ende des Speichergehäuses eingreift. Dieser nach hinten gerichtete, über die Innenbreite der Gehäuseschale 20 reichende und auf den oberen Enden der Steckführungen 36 abgestützte Winkelschenkel untergreift die Längsstege 27 beiderseits, so daß er beiderseits der Öffnung 35 von deren Unterseiten gegen die Anlage an der Gehäuseschale 20 gesichert wird und praktisch zwischen der Gehäuseschale 20 und dem Gehäusedeckel 21 eingespannt ist. Beim Abnehmen des Gehäusedeckels 21 löst sich dieser von selbst vom Isolierwinkel 34, wonach dieser dann aus der geöffneten Gehäuseschale 20 herausgezogen werden kann, so daß sämtliche, am Isolierwinkel 34 vorgesehenen Berührungskontakte 38 der Speichereinheit 10 jederzeit ausgewechselt werden können.

Wie Fig. 3 zeigt, ist das Speichergehäuse an die Aufnahme einer Mehrzahl gleicher, im wesentlichen zylindrischer und parallel zueinander liegender Speicherzellen 37 angepaßt, die in zwei Reihen übereinander bzw. auf Lücke aufeinanderliegend angeordnet sind, wobei die gemeinsame Axialebene zweier benachbarter Speicherzellen 37 beider Reihen die Schräglage der Endwandungen 23, 24 bestimmt, die etwa parallel zu dieser bzw. diesen Axialebenen stehen. Die zur Bodenwandung 22 bzw. zur Anlagefläche 30 parallelen Mittelachsen der Speicherzellen 37 sind rechtwinklig zu den Seitenwandungen des Speichergehäuses vorgesehen, dessen Innenweite der Länge der Speicherzellen 37 entspricht. An den Innenseiten der Seitenwandungen sind nicht näher dargestellte Leiterbrücken vorgesehen, die jeweils die beiden unterschiedlichen Pole an den Enden zweier benachbarter Speicherzellen 37 elektrisch leitend verbinden, so daß sämtliche Speicherzellen 37 gemäß Fig. 11 in Serie geschaltet sind. Die Leiterbrücken bilden Kontaktfedern zur leicht lösbaren Anlage an den Zellenpolen, so daß die Speicherzellen 37 jederzeit ausgewechselt werden können. Die beiden vorderen, übereinander liegenden Speicherzellen 37 greifen in die einspringende Winkelzone des Isolierwinkels 34 ein, so daß eine sehr kompakte Aufnahme der Speicherzellen 37 gewährleistet ist.

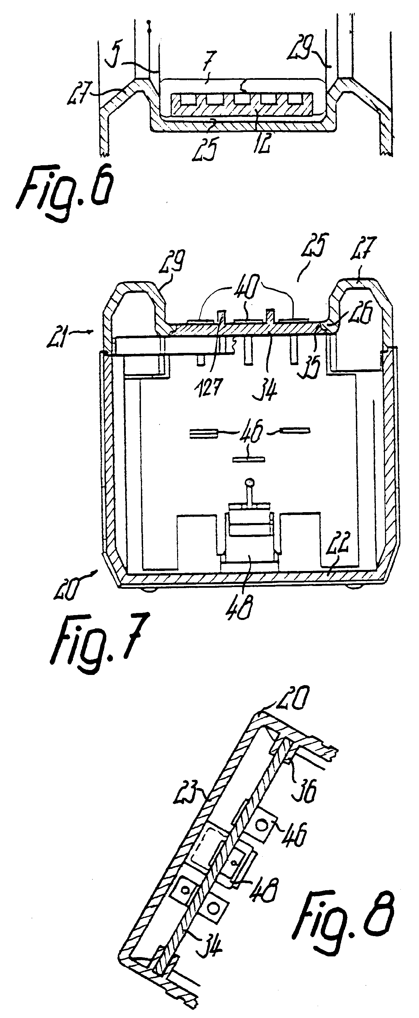

Die Speichereinheit 10 weist drei quer zu ihrer Längsrichtung nebeneinander in einer gemeinsamen Ebene liegende Berührungskontakte 38 auf, deren Länge mehrfach größer als ihre Breite ist, während ihre Zwischenabstände kleiner als ihre Breite sind. Die beiden äußeren Berührungskontakte 38 dienen zur Stromentnahme von den und zur Normalladung der Speicherzellen 37, während der mittlere Berührungskontakt zur geregelten Schnell-Ladung unter Zwischenschaltung einer Überlastsicherung für die Speicherzellen 37 in Form beispielsweise eines NTC-Gliedes dient. Die nur über einen Teil der Länge des zugehörigen Winkelschenkels des Isolierwinkels 34 reichenden und seitlich gegenüber den Stegen 27, 127 (Fig. 7) bzw. der seitlichen Kanten der Öffnung 35 nach innen versetzten Berührungskontakte 38 sind durch Zwischenabschnitte von über ihre Länge konstant breiten Kontaktstreifen 42 gebildet, die im Bereich der Berührungskontakte 38 flächig an der etwa in der Ebene der Anlagefläche 30 liegenden Außenseite des zugehörigen Winkelschenkels des Isolierschenkels 34 anliegen, so daß sie über diese Anlagefläche 30 um ihre wenige zehntel Millimeter bzw. unter einem Millimeter große Streifendicke vorstehen und zwischen den Längsstegen 27, 127 blank freiliegen. Die zum freien Winkelschenkel benachbarten hinteren Enden der Kontaktstreifen 42 sind abgewinkelt in Schlitze dieses Winkelschenkels von außen eingesteckt und dadurch lagegesichert. Die anderen Enden der Berührungskontakte 38 gehen abgewinkelt in Abschnitte über, die ebenfalls flächig an der Außenseite des aufrechten Winkelschenkels liegen und deren Enden ebenfalls gesonderte Schlitze dieses Winkelschenkels durchsetzen, wobei die über die Schlitze vorstehenden Enden verschränkt oder abgewinkelt sein können, so daß die Kontaktstreifen 42 ohne jegliche zusätzlichen Befestigungsmittel lagestarr am Isolierwinkel 34 angeordnet sind. Die zuletzt genannten Enden der Kontaktstreifen 42 bilden Anschlußfahnen 46, beispielsweise Steck- und/oder Lötfahnen, die mit zwei benachbarten, auf derselben Seite des Gehäuses liegenden Leiterbrücken ggf. unter Zwischenschaltung des Regelgliedes über kurze Kabelabschnitte verbunden sind.

Der Halter 11 weist, sofern er nur zur Stromentnahme aus der Speichereinheit 10 vorgesehen ist, lediglich zwei Berührungskontakte 39 auf, die den beiden äußeren Berührungskontakten 38 der Speichereinheit 10 zugeordnet sind. Diese Berührungskontakte 39 sind durch im Querschnitt den Kontaktstreifen 42 entsprechende Kontaktstreifen 43 gebildet, welche ausschließlich und ebenfalls ohne zusätzliche Befestigungsmittel durch Einstecken und ggf. Anschläge bzw. Rastglieder an dem Halter 11 befestigt sind. Diese Berührungskontakte 39 sind durch ebene Streifenabschnitte gebildet, welche an beiden Enden in stumpfwinklig abgewinkelte Streifenschenkel übergehen, die am Boden von nutartigen Vertiefungen 45 in der Gegenanlagefläche 13 des Halters 11 abgestützt sind. Der hintere, durch das zugehörige Streifenende gebildete Streifenschenkel bildet eine kufenartig gekrümmte Abstützfläche, während der andere Streifenschenkel in eine annähernd ebene bzw. geradlinige Anschlußfahne 47 übergeht, die von der zugehörigen Endbegrenzung der Vertiefung 45 her in einen an ihre Querschnitte angepaßten Schlitz des Halters 11 so eingesteckt ist, daß sie an der Außenseite des Sicherungsschenkels 47 frei zugänglich ausragt und mit dem zugehörigen Anschluß des Gerätes verbunden werden kann. Beiderseits des Schlitzes kann der Kontaktstreifen 43 mit aus ihm widerhakenartig herausgebogenen Krall- bzw. Rastzungen abgestützt und dadurch gegen Längsverschiebungen gesichert sein. Durch die beschriebene Ausbildung bilden die Streifenschenkel Kontaktfedern 44, die es erlauben, den Berührungskontakt 39 entgegen Federkraft und im wesentlichen unter Parallelverschiebung zur Gegenanlagefläche 13 hin zu bewegen, wobei der maximale Federweg auf wenige Millimeter, insbesondere weniger als 5 mm, nämlich vorzugsweise etwa 2 mm dadurch begrenzt ist, daß der Berührungskontakt 39 im entlasteten Zustand nur um ein entsprechendes Maß über die Gegenanlagefläche 13 vorsteht. Bei dieser Querbewegung führt der Berührungskontakt 39 gleichzeitig eine kleine Längsbewegung aus, die sich durch die Schwenkbewegung des an die Anschlußfahne 47 anschließenden Streifenschenkels ergibt, wobei durch diese unter Pressung am Berührungskontakt 38 entlang gleitende Längsbewegung eine besonders gute Kontaktierung zwischen den beiden jeweils einander zugehörigen Berührungskontakten 38, 39 erreicht wird.

Durch die beschriebene Ausbildung liegen die großflächigen, im wesentlichen rechteckig begrenzten und praktisch ebenen Kontaktflächen 40, 41 der Berührungskontakte 38, 39 im wesentlichen parallel zueinander sowie annähernd deckungsgleich aneinander in einer Ebene an, die nahezu mit der Ebene der Anlage- und Gegenanlageflächen 30, 13 zusammenfällt und parallel zur Klappachse liegt. Zur Reinigung sind sämtliche Berührungskontakte nach abgenommener Speichereinheit jederzeit leicht zugänglich. Durch das gleichzeitige Verschieben des Klappnockens 32 beim Einschwenken der Speichereinheit ergibt sich eine für die Kontaktierung vorteilhafte Längsbewegung zwischen den Kontaktflächen 40, 41. Beim Entsperren der Speichereinheit 10 drücken die Berührungskontakte 39 die Speichereinheit federnd ab.

Wie die Figuren 3 und 11 ferner zeigen, ist an die äußeren Berührungskontakte 38 der Speichereinheit 10 ferner ein Nebenanschluß 38 in Form beispielsweise einer Koaxial-Steckbuchse angeschlossen, die von der Außenseite des Speichergehäuses auch dann zugänglich ist, wenn dieses an dem Halter 11 angeordnet ist. Der Nebenanschluß 48 ist zweckmäßig im wesentlichen versenkt in der Gehäuseschale 20 angeordnet und beispielsweise benachbart zu deren vorderen Endwand 23 von der Unterseite bzw. vom Gehäuseboden 22 her zugänglich. Der Nebenanschluß 48 kann z.B. zur Aufladung der Speicherzellen 37 oder auch zur Stromentnahme dann verwendet werden, wenn die Speichereinheit 10 sich in Funktionslage an einem Gerät befindet und dadurch seine Berührungskontakte 38 bereits besetzt bzw. nicht zugänglich sind. Das Regelglied für die Schnellaufladung ist in Fig. 11 mit dem Bezugszeichen 49 versehen.

Der die Speichereinheit aufnehmende Halter 11a kann auch, wie Fig. 2 zu entnehmen ist, zur Verwendung im Abstand vom zu betreibenden Gerät als Standhalter zum Aufstellen auf einer Stellfläche, als Wandhalter zum Aufhängen an einer Wand, zum Tragen in einer Tasche bzw. einem Futteral o.dgl. ausgebildet sein. In diesem Fall sind zumindest die der Stromentnahme dienenden Berührungskontakte des Halters 11a über ein von dessen zugehörigen Schenkel 14a weggeführtes flexibles, und beispielsweise durch Wendelung stark längendehnbares Verbindungskabel 50 mit dem anzuschließenden Gerät zu verbinden. Dieses Gerät kann dabei mit einem in der beschriebenen Weise ausgebildeten Steckschuh 21a versehen sein, der im wesentlichen so, wie anhand des Gehäusedeckels 21 beschrieben, ausgebildet ist bzw. entsprechend angeordnete Berührungskontakte, Sperrknöpfe und auch einen Klappnocken 32a aufweist. An dem hinteren Ende dieses Steckschuhes 21a ist zweckmäßig das Verbindungskabel 50 zugeführt. Durch die externe Halterung der Speichereinheit kann das Handhabungsgewicht des Gerätes wesentlich verringert werden. Der Halter 11a ist im dargestellten Ausführungsbeispiel mit einer Halteklammer 51 versehen bzw. als Halteklammer ausgebildet, wobei sein Flachsteg 12a einen Klammerschenkel mit am freien Ende liegendem Schenkel 14a bildet, an dessen der Anschlußfläche 17a zugehöriger Seite des Sperregehäuses 15a ein weiterer, etwa in gleicher Richtung frei ausragender, kürzerer Schenkel angeordnet ist, so daß dieser Halter 11a z.B. durch Aufstecken auf einen Hosenbund am Körper getragen werden kann. Ansonsten sind in Fig. 2 für einander entsprechende Teile die gleichen Bezugszeichen wie in den übrigen Figuren, jedoch mit Indizes, verwendet.

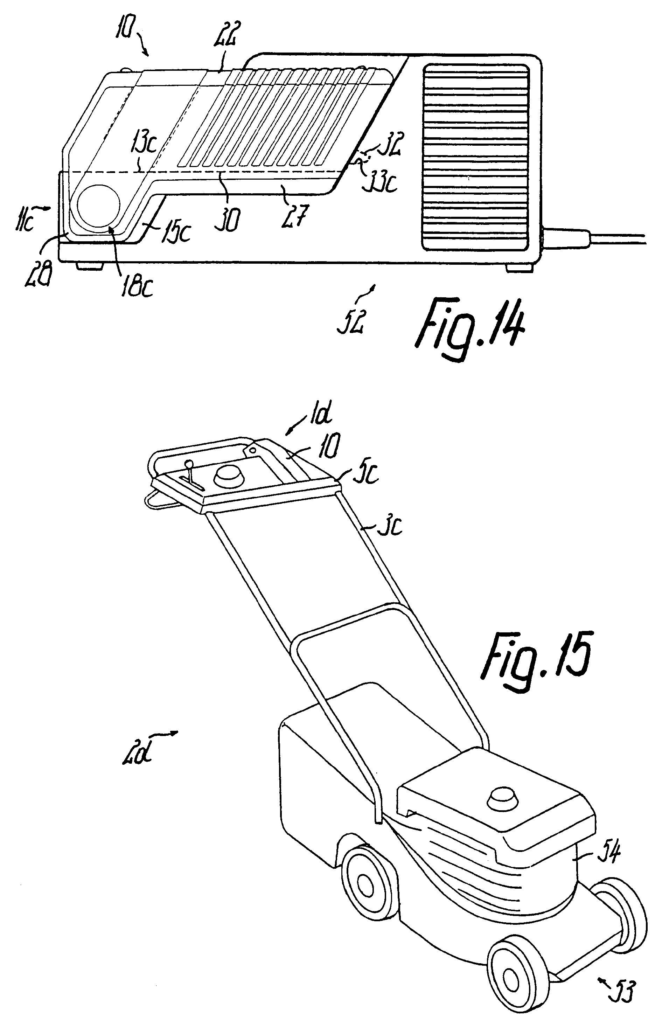

Bei der Ausführungsform nach den Figuren 12 und 13, in welchen der Gerätegriff 3b sowie die Speicherzellen 37b strichpunktiert angedeutet sind, bildet der Flachsteg 12b des Halters 11b nach Art einer Brücke vollständig den Griffsteg 5b, so daß der Halter 11b nur mit seinen Enden, nämlich dem Sicherungsschenkel 14b und dem Sperregehäuse 15b, an dem Gerätegriff 3b befestigt ist und die von der Gegenanlagefläche 13b abgekehrte Stegseite die zugehörige Innenbegrenzung der Grifföffnung bildet. Die Kontaktflächen 41b der Berührungskontakte 39b des Halters 11b sind kürzer als diejenigen der Berührungskontakte 38b der Speichereinheit 10b, so daß sich eine höhere spezifische Kontaktflächenpressung ergibt. Die Anlagefläche 30b sowie die Berührungskontakte 38b sind seitlich nicht von Längsstegen abgeschirmt, sondern liegen an der über die gesamte Breite im wesentlichen eben durchgehenden Oberseite des Speichergehäuses, über die allerdings die Schilde 28b vorstehen. Der in Seitenansicht annähernd trapezförmige Klappnocken 32b ist in diesem Fall bügelförmig ausgebildet, so daß er auch nach Art eines Trag- bzw. Aufhängehenkels verwendet werden kann. Das Speichergehäuse besteht im wesentlichen aus zwei seitlichen, annähernd spiegelsymmetrischen Gehäuseschalen 20b, die entlang einer zur Anlagefläche 30b rechtwinkligen Längsmittelebene aneinander anschließen und von denen jedes einteilig mit einer der Schilde 28b ausgebildet ist, so daß auf einen gesonderten Gehäusedeckel verzichtet werden kann. Für die Druckknöpfe 31b sind in diesem Fall keine gesonderten Rückstellfedern vorgesehen, sondern sie werden durch die auf die Sperrknöpfe 19b wirkende Feder in Ausgangslage gedrückt.

Der Halter 11b ist mit einem über die Oberseite des Sperrgehäuses 15b vorstehenden Ansatz in eine Ausnehmung 8b zwischen den Griffschalen 7b eingesetzt und von einer diese Griffschalen zusammenspannenden Schraube quer durchsetzt, so daß sich eine sehr einfache Befestigung ergibt. Die beiden Sperrknöpfe 19b sind von einer zwischen ihnen liegenden, gemeinsamen Druckfeder belastet, so daß bei Betätigung nur eines Druckknopfes 31b der gegenüberliegende Sperrknopf 19b mit verstärkter Kraft in seine Raststellung gedrückt wird. Die Seitenflächen der Speichereinheit 10b stehen seitlich über die Seitenflächen des Gerätegriffes 3b etwa um die Dicke der Schilde 28b vor. Ansonsten sind in den Figuren 12 und 13 für einander entsprechende Teile die gleichen Bezugszeichen wie in den übrigen Figuren, jedoch mit dem Index b verwendet, weshalb die zugehörigen Beschreibungsteile entsprechend gelten.

In Fig. 14 ist ein Schnell-Ladegerät 52 für die Speichereinheit 10 dargestellt, dessen Gehäuse im wesentlichen einteilig mit einem Halter 11c so integriert ist, daß dessen Gegenanlagefläche 13c oben bzw. an einer von einer Standfläche des Ladegerätes 52 abgekehrten Seite liegt. Die Speichereinheit 10 ist daher in das Ladegerät 52 mit oben liegender Bodenwandung 22 und nach unten gerichteten Schilden 28 einzusetzen, wobei ihr vorderer, von den Schilden 28 entfernter Endbereich in eine Nische des Gehäuses des Ladegerätes 52 so eingreift, daß er seitlich über seine gesamte Höhe abgeschirmt ist. Das Ladegerät 52 weist für die Aufnahme des Klappnockens 32 ebenfalls eine Nockentasche 33c auf und ist mit einer Sperre 18c zur Sicherung des anderen Endes der Speichereinheit 10 versehen. Benachbart zu dem der Nockentasche 33c zugehörigen Ende der Aufnahme für die Speichereinheit 10 sind in dem Gehäuse des Ladegerätes 52 dessen elektrische Betriebsteile untergebracht, während, das andere Ende des Ladegeräte-Gehäuses praktisch mit dem zugehörigen Ende der Speichereinheit 10 abschließt. Das Ladegerät kann beiderseits seiner Berührungskontakte vorstehende Stege, Rippen o.dgl. aufweisen, die in entsprechende Nuten der Anlagefläche 30 bzw. des Isolierwinkels 34 eingreifen, die Kontakte seitlich abschirmen und als Distanzhalter Kurzschlüsse durch in ihren Bereich gelangende Metallteile verbinden. Entsprechende Stege können auch seitlich der Berührungskontakte 38 vorgesehen sein und in Nuten des Halters 11c eingreifen, wobei zweckmäßig zwischen den Berührungskontakten 38 jeweils ein Steg am Isolierwinkel 34 vorgesehen ist und die Gegenanlagefläche 13c Stege an den Außenseiten der äußeren Berührungskontakte aufweist.

In Fig. 15 ist als Gerät ein Rasenmäher 2d dargestellt, der auf einem Fahrgestell 53 einen Verbrennungsmotor 54 mit nicht näher dargestellter, elektrischer Startvorrichtung aufweist, wobei der Rasenmäher 2d mit einem nach hinten abstehenden und ansteigenden Griffbügel 3c durch Schieben oder Ziehen zu bewegen ist. Im oberen Endbereich sind die Schenkel des Griffbügels 3c mit einem Bedienungspanel 5c miteinander verbunden, an welchem die Betätigungsorgane zur manuellen Steuerung des Rasenmähers 2d bzw. des Verbrennungsmotors 54 vorgesehen sind. Dieses Bedienungspanel 5c ist mit einem nicht näher dargestellten Halter für die Aufnahme der Speichereinheit 10 an der Oberseite des Bedienungspanels 5c versehen, wobei die Anschlußfahnen des Halters mit der elektrischen Startvorrichtung leitend verbunden sind. Die Speichereinheit 10 kann auch elektromotorisch einen Zwischen-, z.B. einen Federspeicher, antreiben, der im aufgeladenen Zustand doch z.B. einen Anlasser für den Gerätemotor bildet, wobei die Leistung des Anlassers höher als die der Speichereinheit ist.

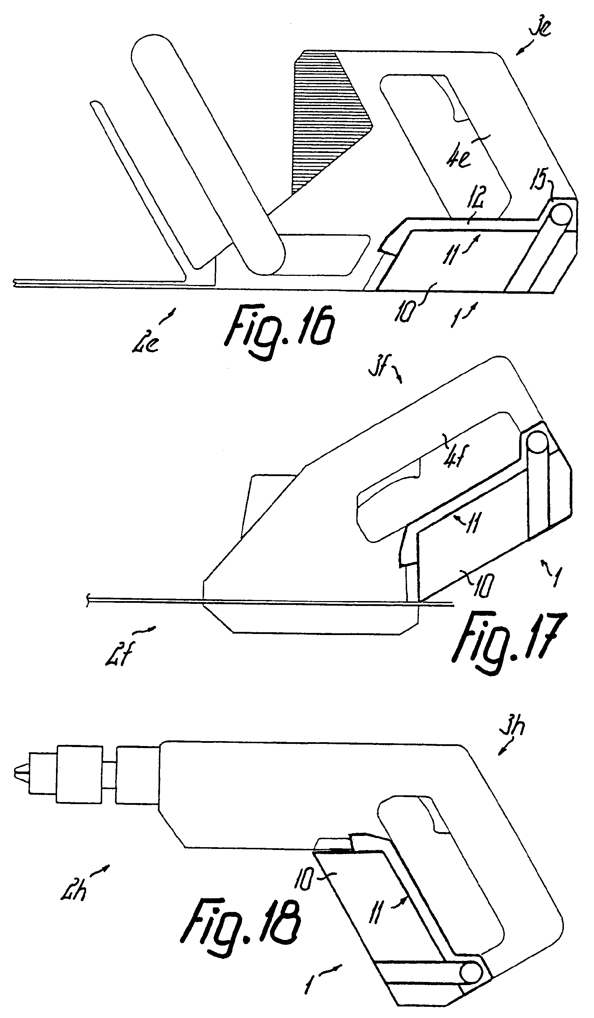

In Fig. 16 ist die Anordnung der Versorgungseinrichtung 1 an einem Elektrowerkzeug dargestellt, bei welchem der Gerätegriff 3e bzw. der Greifsteg 4e gegenüber der Werkzeug-Arbeitsebene nach vorne geneigt ist, wie das z.B. bei einer Heckenschere der Fall sein kann. Der Greifsteg 4e steht in diesem Fall quer über dem Halter 11, dessen Sperregehäuse 15 in das untere Ende des Greifsteges 4e eingreift, wobei die Grifföffnung etwa im Bereich der Mitte der Länge des Flachsteges 12 vorgesehen ist, so daß dieser deren zugehörige Begrenzung bilden kann. Die Bodenwandung der eingesetzten Speichereinheit 10 schließt bündig mit der Unterseite des Gerätes 2e bzw. mit dessen Gerätegehäuse ab, so daß die Speichereinheit 10 eine Fortsetzung der Standfläche des Gerätes beim Abstellen bilden kann und im abgestellten Zustand eine Entlastung der Verbindung zwischen der Speichereinheit 10 und dem Gerät 2e gegeben ist.

In Fig. 17 ist ein Gerät 2f mit schräg nach hinten von der Werkzeug-Arbeitsebene bzw. vom Arbeitsbereich des Werkzeuges ansteigendem Gerätegriff 3f und Greifsteg 4f dargestellt, wobei die Versorgungseinheit 1 entsprechend ansteigend an der Unterseite des Gerätegriffes 3f und oberhalb des Werkzeug-Arbeitsbereiches vorgesehen ist. Dieses Gerät 2f kann z.B. eine Elektroschere sein.

Während es sich im Falle der Ausbildungen nach den Figuren 16 und 17 um Geräte mit hin- und hergehenden Arbeitsbewegungen handelt, ist in Fig. 18 ein Elektro-Geräte 2h mit drehender Arbeitsbewegung, nämlich eine Handbohrmaschine, dargestellt, die eine an einem Ende für die Werkzeugaufnahme zugängliche Arbeitsspindel aufweist. Am anderen Ende dieses Gerätes 2h ist ein im wesentlichen unterhalb der Spindelachse liegender, schräger Gerätegriff 3h vorgesehen, wobei die Versorgungseinrichtung 1 an der Vorderseite des Gerätegriffes 3h und unterhalb des Spindel- bzw. Motorgehäuses des Gerätes 2h liegt. Jedes, mit einem passenden Halter 11 versehene Gerät kann zur Stromversorgung mit derselben bzw. einer gleichen Speichereinheit 10 bestückt werden.

## Patentansprüche

1. Elektrische Strom-Versorgungseinrichtung für netzunabhängig zu versorgende Geräte (2) oder dergleichen, wie Elektrowerkzeuge, mit einer abnehmbar in eine Halterung (11) einsetzbaren Speichereinheit (10), die mit der Halterung (11) in einer Fügerichtung über einander zugeordnete und eine Anlageebene bestimmende Bestimmungsflächen (30, 13), nämlich Anlage- und Gegenanlageflächen (30, 13) sowie über Kontaktpaare (38, 39) aus Kontakten (38, 39), wie Berührungskontakten, zu verbinden ist, von denen wenigstens einer eine etwa parallel zur Anlageebene liegende und eine Kontaktebene bestimmende Kontaktfläche (40, 41) aufweist, dadurch gekennzeichnet, daß die Kontaktpaare (38, 39) in einer Fügerichtung im wesentlichen quer zur Kontaktebene in bzw. außer Eingriff zu bringen sind.

2. Versorgungseinrichtung insbesondere nach Anspruch 1, dadurch gekennzeichnet, daß die Kontaktpaare (38, 39) über eine die Fügerichtung bestimmende Schwenkbewegung in bzw. außer Eingriff zu bringen sind, daß insbesondere mindestens ein Kontakt (38), wie der jeweilige Kontakt (38) der Speichereinheit (10), im wesentlichen lagestarr angeordnet ist und/oder nur um eine Streifendicke über die zughörige Bestimmungsfläche (30) vorsteht und daß vorzugsweise im wesentlichen alle Kontakte (38, 39) annähernd in zu den Anlage- und Gegenanlageflächen (30, 13) parallelen Ebenen liegend vorgesehen und je Kontaktpaar mindestens ein Berührungskontakt (39) quer zu dieser Ebene federnd nachgiebig ist.

3. Versorgungseinrichtung, insbesondere nach Anspruch 1 oder 2, dadurch gekennzeichnet, daß mindestens ein Berührungskontakt (38, 39) je Kontaktpaar, insbesondere beide Berührungskontakte (38, 39) flach länglich streifenförmig etwa parallel zu Anlage- und Gegenanlageflächen (30, 13) der Speichereinheit (10) und des Halters (11) vorgesehen sind, wobei vorzugsweise jeweils mehrere Berührungskontakte (38 bzw. 39) parallel nebeneinander liegen und/oder die Berührungskontakte (38, 39) des jeweiligen Kontaktpaares über den größten Teil ihrer Streifenlänge aneinander anliegen.

4. Versorgungseinrichtung, insbesondere nach einem der vorhergehenden Ansprüche, dadurch gekennzeichnet, daß je Kontaktpaar mindestens ein Berührungskontakt (38 bzw. 39) annähernd in der Ebene der Anlage- bzw. Gegenanlagefläche (30 bzw. 13) freiliegend vorgesehen ist und daß vorzugsweise die lagestarren Berührungskontakte (38) der Speichereinheit (10) nur etwa um ihre Streifendicke über die Anlagefläche (30) vorstehen und/oder die quer zur Gegenanlagefläche (13) federnden Berührungskontakte (39) des Halters (11) in Vertiefungen (45) in der Gegenanlagefläche (13) eingreifen.

5. Versorgungseinrichtung, insbesondere nach einem der vorhergehenden Ansprüche, dadurch gekennzeichnet, daß die elektrische Leitungsverbindung bzw. die Kontaktpaare näher bei einer insbesondere im Abstand von der Außenseite der Speichereinheit (10) liegenden Klappachse für eine schwenkende und verschiebende Zusammensetzbewegung mit dem Halter (11) und/oder im wesentlichen rechtwinklig zu dieser Klappachse, vorzugsweise im wesentlichen unmittelbar benachbart zum zugehörigen Ende der Speichereinheit (10) bzw. des Halters (11) liegen.

6. Versorgungseinrichtung, insbesondere nach einem der vorhergehenden Ansprüche, dadurch gekennzeichnet, daß die Speichereinheit (10) in eingesetztem Zustand mit mindestens einer Sperre (18), insbesondere mit zwei gesondert zu betätigenden, an voneinander abgekehrten Seiten liegenden Druckknopf-Sperren (18) gesichert ist, die vorzugsweise im Bereich von den Halter (11) seitlich übergreifenden Schilden (28) der Speichereinheit (10) vorgesehen sind, wobei die jeweilige Sperre (18) insbesondere hintereinander liegende Schubknöpfe, nämlich einen Auslöse-Druckknopf (31) an der Speichereinheit (10) sowie einen in dessen Bewegungsweg liegenden Sperrknopf (19) am Halter (11) aufweist und mindestens einer dieser Schubknöpfe zur Sperrstellung federbelastet ist.

7. Versorgungseinrichtung, insbesondere nach einem der vorhergehenden Ansprüche, dadurch gekennzeichnet, daß der Halter (11) durch eine in sich geschlossene bzw. für die Befestigung am Gerät (2) ausgebildete Baueinheit gebildet ist, die insbesondere einen Flachsteg (12) mit der Gegenanlagefläche (13) sowie einen an dessen einem Ende im Winkel über die Gegenanlagefläche (13) vorstehenden Sicherungsschenkel (14) für den Eingriff eines vorstehenden Klappnockens (32) der Speichereinheit (10) und/oder am anderen Ende ein in der entgegengesetzten Richtung abstehendes Sperregehäuse (15) aufweist, wobei der Halter (11) bei eingesetzter Speichereinheit (10) vorzugsweise im wesentlichen vollständig versenkt in einer Vertiefung (25) der Speichereinheit (10) und/oder des Gerätes (2) liegt.

8. Versorgungseinrichtung, insbesondere nach einem der vorhergehenden Ansprüche, dadurch gekennzeichnet, daß die Speichereinheit (10) im wesentlichen durch ein Gehäuse gebildet ist und daß vorzugsweise die Anlagefläche (30) und/oder Sperrgegenglieder der Sperre (18) an einem im wesentlichen über die Gehäuselänge reichenden Gehäusedeckel (21) vorgesehen sind, wobei insbesondere die zugehörigen Berührungskontakte (38) an einem gesonderten, in eine Öffnung des Gehäusedeckels (21) eingreifenden Isolierwinkel (34) angeordnet sind.

9. Versorgungseinrichtung, insbesondere nach einem der vorhergehenden Ansprüche, dadurch gekennzeichnet, daß die Speichereinheit (10) und die Halterung bzw. der Halter (11) über eine Dreipunkt-Verbindung ineinander greifen, wobei vorzugsweise der gegenüber der Speichereinheit (10) schmalere Klappnocken (32) und die beiden Sperren (18) die an den Spitzen eines spitzwinkligen und/oder gegenüber den Anlage- und Gegenanlageflächen (30, 13) geneigten Dreieckes liegenden Verbindungspunkte bilden.

10. Versorgungseinrichtung, insbesondere nach einem der vorhergehenden Ansprüche, dadurch gekennzeichnet, daß die Halterung bzw. der Halter (11) als Gehäuse-, insbesondere Griffteil eines Gerätegriffes (3) ausgebildet ist und vorzugsweise im wesentlichen gleich breit und/oder gleich lang wie der zugehörige Griffsteg (5) ist.

11. Versorgungseinrichtung, insbesondere nach einem der vorhergehenden Ansprüche, dadurch gekennzeichnet, daß die Halterung bzw. mindestens ein Halter an die elektrische Startvorrichtung eines Motors, wie eines Rasenmäher-Verbrennungsmotors (54), angeschlossen und vorzugsweise an einem Bedienungspanel (5c) eines Bügelgriffes (3c) angeordnet ist.

12. Versorgungseinrichtung, insbesondere nach einem der vorhergehenden Ansprüche, dadurch gekennzeichnet, daß die Halterung bzw. mindestens ein Halter (11a) als vom Gerät gesonderter Halter, beispielsweise zum Tragen am Körper einer Bedienungsperson, insbesondere als Steck- bzw. Halteklammer (51), ausgebildet und vorzugsweise über ein flexibles Verbindungskabel (50) mit wenigstens einem Steckschuh (21a) für den Halter (11) für ein Gerät verbunden ist.

13. Versorgungseinrichtung, insbesondere nach einem der vorhergehenden Ansprüche, dadurch gekennzeichnet, daß die Halterung bzw. mindestens ein Halter (11c) Bestandteil eines Ladegerätes (52) für mindestens eine, insbesondere etwa zehn in zwei Reihen übereinander liegende Speicherzellen (37) wenigstens einer Speichereinheit (10) ist.

14. Versorgungseinrichtung, insbesondere nach einem der vorhergehenden Ansprüche, dadurch gekennzeichnet, daß die Speichereinheit (10) mindestens einen, insbesondere von den Berührungskontakten (38) gesonderten, elektrischen Nebenanschluß (48), vorzugsweise eine zweipolige Steckbuchse aufweist, der insbesondere an der von den Berührungskontakten (38) abgekehrten Seiten und/oder in Nähe eines Endes der Speichereinheit (10) liegt.

## Claims

1. Electric power supply device for mains-independently suppliable appliances (2) or the like, such as electric tools, with a storage unit (10) removably insertable in a holder (11) and connectable with the holder (11) in a joining direction by means of associated defining surfaces (30,13) defining a fitting plane, namely bearing and counterbearing surfaces (30,13), as well as by means of contact pairs (38,39) formed from contacts (38,39), such as contacting contacts, whereof at least one has a contact face (40,41) located roughly parallel to the fitting plane and defining a contact plane, characterized in that the contact pairs (38,39) in one joining direction are to be engaged or disengaged substantially at right angles to the contact plane.

2. Power supply device, particularly according to claim1, characterized in that the contact pairs (38,39) are engageable or disengageable by means of a pivoting movement defining the joining direction, that in particular at least one contact (38), such as the particular contact (38) of the storage unit (10), is positioned in substantially rigid manner and/or only projects by a strip thickness over the associated defining surface (30) and that preferably substantially all the contacts (38,39) being provided in planes substantially parallel to the bearing and counterbearing surfaces (30,13) and each contact pair has at least one contacting contact (39), which is resiliently flexible at right angles to said plane.

3. Supply device, particularly according to claims 1 or 2, characterized in that at least one contacting contact (38,39) per contact pair and in particular both contacting contacts (38,39) are provided in flat, elongated, strip-like manner, approximately parallel to the bearing and counterbearing surfaces (30,13) of the storage unit (10) and the holder (11) and preferably in each case several contacting surfaces (38,39) are parallel juxtaposed and/or the contacting contacts (38,39) of the particular contact pair engage on one another over most of their strip length.

4. Supply device, particularly according to one of the preceding claims, characterized in that per contact pair at least one contacting contact (38 or 39) is provided exposed approximately in the plane of the bearing or counterbearing surface (30 or 13) and that preferably the positionally rigid contacting contacts (38) of the storage unit (10) only project by their strip thickness over the bearing surface (30) and/or the contacting contacts (39) of the holder (11) resilient at right angles to the counter-bearing surface (13) engage in depressions (45) in the said surface (13).

5. Supply device, particularly according to one of the preceding claims, characterized in that the electrical line connection or the contact pairs are located closer to a hinge axis in particular spaced from the outside of the storage unit (10) for a pivoting and displacing assembly movement with the holder (11) and/or substantially at right angles to said hinge axis, preferably substantially immediately adjacent to the associated end of the storage unit (10) or the holder (11).

6. Supply device, particularly according to one of the preceding claims, characterized in that the storage unit (10) is secured in the inserted state with at least one lock (18), particularly with two separately operable pushbutton locks (18) located on remote sides and which are preferably provided in the vicinity of plates (28) of storage unit (10) laterally engaging over the holder (11), the particular lock (18) having in particular successively located pushbuttons, namely a release pushbutton (31) on the storage unit (10) and a locking stud (19) on holder (11) in the movement path of unit (10) and at least one of these pushbuttons is spring loaded towards the locking position.

7. Supply device, particularly according to one of the preceding claims, characterized in that the holder (11) is formed by a closed component or which is constructed for fixing to the appliance (2) and which in particular has a flat web (12) with the counterbearing surface (13) and a securing leg (14) projecting at its one end at an angle over the counterbearing surface (13) for engaging with a projecting hinged can (32) of the storage unit (10) and/or at the other end a locking casing (15) projecting in the opposite direction and when the storage unit (10) is inserted, the holder (11) is preferably substantially completely embedded in a recess (25) of the storage unit (10) and/or the appliance (2).

8. Supply device, particularly according to one of the preceding claims, characterized in that the storage unit (10) is substantially formed by a casing and that preferably the bearing surface (30) and/or the locking countermembers of lock (18) are provided on a casing cover (21) extending over the casing length and in particular the associated contacting contacts (38) are arranged on a separate insulating wedge (34) engaging in an opening of casing cover (21).

9. Supply device, particularly according to one of the preceding claims, characterized in that the storage unit (10) and the mounting support or holder (11) engage in one another by means of a three-point connection and preferably the hinged cam (32) which is narrower than the storage unit (10) and the two locks (18) form the connecting points located at the apices of an acute-angled triangle and/or which is inclined with respect to the bearing and counterbearing surfaces (30, 13).

10. Supply device, particularly according to one of the preceding claims, characterized in that the mounting support or holder (11) is constructed as a casing and in particular a grip part of an appliance grip (3) and is preferably substantially of the same width and/or length as the associated grip web (5).

11. Supply device, particularly according to one of the preceding claims, characterized in that the mounting support or at least a holder is connected to the electric starter of a motor, such as a lawnmower internal combustion engine (54) and is preferably located on a control panel (5c) of a handle (3c).

12. Supply device, particularly according to one of the preceding claims, characterized in that the mounting support or at least a holder (lla) is constructed as a holder separate from the appliance and in particular as a plug-in or retaining clip (51) which can e.g. be worn on the body of the operator and is preferably connected by means of a flexible connecting cable (50) to at least one plug-in shoe (21a) for the holder (11).

13. Supply device, particularly according to one of the preceding claims, characterized in that the mounting support or at least a holder (llc) is part of a charger (52) for at least one and in particular approximately ten storage cells (37), which are superimposed in two rows, of at least one storage unit (10).

14. Supply device, particularly according to one of the preceding claims, characterized in that the storage unit (10) has at least one electric secondary connection (48), which is separate from the contacting contacts (38) and preferably has a bipolar socket, which is in particular located on the sides remote from the contacts (38) and/or in the vicinity of one end of the storage unit (10).

## Revendications

1. Dispositif d'alimentation en courant électrique pour des appareils (2) ou similaires à alimenter indépendamment du secteur, tels que des outils électriques, avec une unité accumulatrice (10), qui peut être insérée de manière amovible dans un support (11) et qui doit être assemblée au support (11) dans une direction d'assemblage par l'intermédiaire de faces de référence (30, 13) mutuellement associées et définissant un plan d'application, à savoir des faces complémentaires d'application (30, 13), ainsi que par l'intermédiaire de paires de contacts (38, 39) constituées de contacts (38, 39) tels que des contacts par toucher, dont au moins un présente une face de contact (40, 41) approximativement parallèle au plan d'application et définissant un plan de contact, **caractérisé** en ce que les paires de contacts (38, 39) peuvent être amenées en engagement ou, selon le cas, hors d'engagement dans une direction d'assemblage sensiblement transversalement au plan de contact.

2. Dispositif d'alimentation, notamment selon la revendication 1, **caractérisé** en ce que les paires de contacts (38, 39) peuvent être amenées en engagement ou, selon le cas, hors d'engagement au moyen d'un mouvement de pivotement définissant la direction d'assemblage, en ce que, notamment, au moins un contact (38), tel que le contact respectif (38) de l'unité accumulatrice (10), est disposé en position essentiellement fixe et/ou ne dépasse que d'une épaisseur de bande de la face de référence associée (30), et en ce que, de préférence, sensiblement tous les contacts (38, 39) sont approximativement situés dans des plans parallèles aux faces complémentaires d'application (30, 13), et au moins un contact par toucher (39) de chaque paire de contacts est élastiquement flexible transversalement à ce plan.

3. Dispositif d'alimentation, notamment selon la revendication 1 ou 2, **caractérisé** en ce qu'au moins un contact par toucher (38, 39) de chaque paire de contacts, notamment les deux contacts par toucher (38, 39), sont prévus en forme de bande plate et oblongue approximativement parallèlement aux faces complémentaires d'application (30, 13) de l'unité accumulatrice (10) et du support (11), plusieurs contacts par toucher (38 ou 39) étant de préférence respectivement juxtaposés en parallèle, et/ou les contacts par toucher (38, 39) de la paire respective de contacts s'appliquant l'un contre l'autre sur la majeure partie de leur longueur de bande.

4. Dispositif d'alimentation, notamment selon l'une des revendications précédentes, **caractérisé** en ce qu'au moins un contact par toucher (38 ou 39) de chaque paire de contacts est prévu dégagé approximativement dans le plan de la face d'application respective (30 ou 13), et en ce que, de préférence, les contacts par toucher (38) à position fixe de l'unité accumulatrice (10) ne dépassent de la face d'application (30) qu'environ de leur épaisseur de bande, et/ou les contacts par toucher (39) du support (11), élastiques transversalement à la face d'application complémentaire (13), s'engagent dans des renfoncements (45) dans la face d'application complémentaire (13).

5. Dispositif d'alimentation, notamment selon l'une des revendications précédentes, **caractérisé** en ce que la liaison électrique ou encore les paires de contacts se trouvent plus près d'un axe de rabattement, situé notamment à distance du côté extérieur de l'unité accumulatrice (10), pour un mouvement d'assemblage par pivotement et translation avec le support (11), et/ou sensiblement perpendiculairement à cet axe de rabattement, de préférence sensiblement au voisinage immédiat de l'extrémité associée de l'unité accumulatrice (10) ou, respectivement, du support (11).

6. Dispositif d'alimentation, notamment selon l'une des revendications précédentes, **caractérisé** en ce que l'unité accumulatrice (10) est assujettie à l'état inséré par au moins un verrouillage (18), notamment par deux verrouillages (18) à bouton poussoir à actionner séparément et situés sur des côtés mutuellement opposés, qui sont de préférence prévus dans la région de flasques (28) de l'unité accumulatrice (10) qui recouvrent latéralement le support (11), chaque verrouillage (18) présentant notamment des boutons à pousser situés l'un derrière l'autre, à savoir un bouton-poussoir de libération (31) sur l'unité accumulatrice (10) ainsi qu'un bouton de verrouillage (19), situé dans la voie de déplacement du bouton (31), sur le support (11), et au moins un de ces boutons à pousser étant sollicité par ressort vers la position de verrouillage.

7. Dispositif d'alimentation, notamment selon l'une des revendications précédentes, **caractérisé** en ce que le support (11) est formé par une unité de construction en soi fermée ou encore conçue pour la fixation sur l'appareil (2), unité qui présente notamment une nervure plate (12) pourvue de la face d'application complémentaire (13) ainsi qu'une branche d'assujettissement (14), dépassant en angle de la face d'application complémentaire (13) à une des extrémités de la nervure (12), pour l'engagement d'un ergot de rabattement saillant (32) de l'unité accumulatrice (10), et/ou, à l'autre extrémité, un boîtier de verrouillage (15) partant en saillie dans la direction opposée, le support (11) se trouvant de préférence, lorsque l'unité accumulatrice (10) est insérée, sensiblement totalement escamoté dans un renfoncement (25) de l'unité accumulatrice (10) et/ou de l'appareil (2).

8. Dispositif d'alimentation, notamment selon l'une des revendications précédentes, **caractérisé** en ce que l'unité accumulatrice (10) est essentiellement formée par un boîtier, et en ce que, de préférence, la face d'application (30) et/ou des organes complémentaires de verrouillage du verrouillage (18) sont prévus sur un couvercle de boîtier (21) s'étendant sensiblement sur toute la longueur du boîtier, les contacts par toucher associés (38) étant notamment disposés sur une équerre isolante distincte (34), s'engageant dans une ouverture du couvercle de boîtier (21).

9. Dispositif d'alimentation, notamment selon l'une des revendications précédentes, **caractérisé** en ce que l'unité accumulatrice (10) et le support ou la console (11) s'engagent l'un dans l'autre par un assemblage en trois points, l'ergot de rabattement (32), plus étroit que l'unité accumulatrice (10), et les deux verrouillages (18) formant de préférence les points d'assemblage situés sur les sommets d'un triangle acutangle et/ou incliné par rapport aux faces complémentaires d'application (30, 13).

10. Dispositif d'alimentation, notamment selon l'une des revendications précédentes, **caractérisé** en ce que le support ou la console (11) est conçu comme partie de boîtier et notamment comme partie de poignée d'une poignée d'appareil (3) et, de préférence, est sensiblement de la même largeur et/ou de la même longueur que la branche associée de poignée (5).

11. Dispositif d'alimentation, notamment selon l'une des revendications précédentes, **caractérisé** en ce que le support ou, selon le cas, au moins une console est raccordé au dispositif de démarrage électrique d'un moteur, tel qu'un moteur thermique (54) de tondeuse à gazon, et est de préférence disposé sur un pupitre de manoeuvre (5c) d'une poignée en étrier (3c).

12. Dispositif d'alimentation, notamment selon l'une des revendications précédentes, **caractérisé** en ce que le support ou, selon le cas, au moins une console (11a) est réalisé sous la forme d'une console distincte de l'appareil, par exemple à porter sur le corps d'un utilisateur, notamment sous forme d'attache de fixation (51), et est de préférence relié à un appareil par l'intermédiaire d'un câble souple de liaison (50) pourvu d'au moins un sabot de connexion (21a) pour la console (11).

13. Dispositif d'alimentation, notamment selon l'une des revendications précédentes, **caractérisé** en ce que le support ou, selon le cas, au moins une console (11c) fait partie d'un appareil de chargement (52) pour au moins un élément accumulateur (37), et notamment environ dix éléments accumulateurs superposés en deux rangées, d'au moins une unité accumulatrice (10).

14. Dispositif d'alimentation, notamment selon l'une des revendications précédentes, **caractérisé** en ce que l'unité accumulatrice (10) présente au moins un raccordement électrique auxiliaire (48), notamment séparé des contacts par toucher (38), de préférence une douille de connexion bipolaire, qui se trouve notamment sur le côté opposé aux contacts par toucher (38) et/ou à proximité d'une extrémité de l'unité accumulatrice (10).
